# EUROPÄISCHE PATENTSCHRIFT

(11) **EP 3 857 211 B1**
(45) Veröffentlichungstag und Bekanntmachung des Hinweises auf die Patenterteilung: **24.04.2024**
(21) Anmeldenummer: 19780193.9
(22) Anmeldetag: 25.09.2019
(51) Int. Cl.: B23Q 17/24, G01N 21/88, G01N 21/952, G01B 11/25

(54) **VERFAHREN ZUR OBERFLÄCHENAUFNAHME EINES ROTIERENDEN KÖRPERS**
METHOD FOR SURFACE RECORDING OF A ROTATING BODY
PROCÉDÉ DE PRISE DE VUES DE SURFACE D'UN CORPS ROTATIF

(30) Priorität: 26.09.2018 DE 102018216458
(43) Veröffentlichungstag der Anmeldung: 04.08.2021
(73) Patentinhaber: Hochschule für Angewandte Wissenschaften Kempten, 87435 Kempten (DE)
(72) Erfinder: REHM, Maximilian, 87471 Durach (DE); BECK, Michael, 87435 Kempten (DE); DONHAUSER, Christian, 87487 Wiggensbach (DE); LAYH, Michael, 87452 Altusried (DE); PINZER, Bernd, 87439 Kempten (DE); VOGELEI, Christian, 82229 Seefeld (DE)
(74) Vertreter: Hoefer & Partner Patentanwälte mbB
(86) Internationale Anmeldenummer: PCT/EP2019/075900
(87) Internationale Veröffentlichungsnummer: WO 2020/064856

(56) Entgegenhaltungen:
- CN-A- 106 840 028
- DE-A1- 4 417 015
- DE-A1-102007 002 624

## Beschreibung

Die Erfindung betrifft eine Werkzeugmaschine zur Durchführung eines Verfahrens zur Oberflächenaufnahme eines rotierenden Körpers. Bei dem Körper handelt es sich insbesondere um ein Werkzeug oder ein Werkstück. Des Weiteren betrifft die Erfindung ein Verfahren zum Betrieb der Werkzeugmaschine.

Aus dem Stand der Technik sind unterschiedliche Methoden bekannt, um die Oberflächenbeschaffenheit eines Körpers optisch zu erfassen. Allerdings hat es sich als problematisch herausgestellt, die Oberfläche optisch zu erfassen, wenn der Körper, nämlich ein Werkzeug oder ein Werkstück, schnell rotiert. In diesem Fall limitiert nämlich die Bildwechselfrequenz (Framerate) des Chips der Kamera bzw. die Auslesegeschwindigkeit des Chips, die Anzahl an möglicher Aufnahmen. Dies ist insbesondere relevant, wenn die Oberfläche des Körpers während dessen Benutzung und somit währen der schnellen Rotation innerhalb einer Werkzeugmaschine erfasst werden soll.

DE 44 17 015 A1 betrifft einen Sortierautomaten, bei dem die optische Mustererkennung mit einer Farb-Zeilen-Kamera erfolgt, in deren Strahlengang mindestens ein bewegbarer Spiegel angeordnet ist, welcher Spiegel den Strahlengang der Kamera in Vorschubrichtung des Produktes diesem nachführt. In einer anderen Ausgestaltung ist vorgesehen, statt eines bewegbaren Spiegels eine bewegbare Kamera zu verwenden, welche sich synchron über eine bestimmte Strecke mit der Transportrichtung des Produktes (transversal) bewegt.

DE 10 2007 002 624 A1 betrifft ein Verfahren und eine Vorrichtung zur Qualitätskontrolle eines rotationssymmetrischen Körpers und einen Greifer eines Handhabungssystems zum Greifen eines rotationssymmetrischen Körpers. Um die Qualitätskontrolle von rotationssymmetrischen Körpern schneller, zuverlässiger und kostengünstiger zu gestalten, wird vorgeschlagen, dass der Greifer Greiffinger mit rotationssymmetrischen Halteelementen zum Festhalten des Körpers aufweist, wobei die Halteelemente um ihre Rotationsachsen rotierbar in den Greiffingern gelagert sind. Zum Greifen des Körpers werden die Greiffinger auf einer Kreisbahn bewegt. Es ist jeweils ein zentraler Antriebsmechanismus für die Rotationsbewegung der Halteelemente aller Greiffinger und für die Drehbewegung aller Greiffinger vorgesehen.

CN106840028 A ist mit einem Verfahren und einer Vorrichtung zur Vor-Ort-Messung des Fräserverschleißes beschäftigt.

Somit ist es eine Aufgabe vorliegender Erfindung eine Werkzeugmaschine zur Durchführung eines Verfahrens zur Oberflächenaufnahme bereitzustellen, das bei einfacher Durchführung ein möglichst genaues Abbild der Oberfläche eines schnell rotierenden Körpers ermöglicht. Des Weiteren ist es Aufgabe vorliegender Erfindung solch ein Verfahren in einer Werkzeugmaschine durchzuführen.

Die Lösung der Aufgabe erfolgt durch die Merkmale der unabhängigen Ansprüche. Die abhängigen Ansprüche haben vorteilhafte Ausgestaltungen der Erfindung zum Gegenstand.

Somit wird die Erfindung gelöst durch eine Werkzeugmaschine, ausgebildet zur Durchführung eines Verfahrens zur Oberflächenaufnahme umfassend die folgenden Schritte:

### Verteilung der Aufnahmen auf mehrere Umdrehungen

Es erfolgt ein Rotieren des Körpers. Bei dem Körper handelt es sich insbesondere um ein Werkzeug oder ein Werkstück. Die Rotation erfolgt um eine Drehachse. Während der Rotation des Körpers werden mittels einer Kamera eine Vielzahl an Aufnahmen gemacht. Die einzelnen Aufnahmen sind bezüglich der Drehachse drehwinkelversetzt. Dabei bildet jede Aufnahme einen anderen Teilbereich der Oberfläche, insbesondere der Umfangsoberfläche, des Körpers ab. Alle Aufnahmen zusammen bilden dabei maximal 360 Grad, allgemein beschrieben einen Drehwinkelbereich m von bis zu 360 Grad, der Oberfläche, insbesondere der Umfangsoberfläche, des Körpers ab. Die Anzahl der Aufnahmen, die bis zu 360 Grad der Umfangsoberfläche abbilden, wird als a bezeichnet. Sämtliche Aufnahmen a geben zusammengesetzt ein möglichst fein aufgelöstes Abbild der Oberfläche des Körpers. Insbesondere beträgt die Anzahl der Aufnahmen a zumindest 10, vorzugsweise zumindest 50, weiter vorzugsweise zumindest 100, besonders vorzugsweise zumindest 500.

Im Rahmen der Erfindung wurde erkannt, dass diese große Anzahl an Aufnahmen bei der entsprechend hohen Drehgeschwindigkeit möglich ist, indem die Aufnahmen auf mehrere Umdrehungen des Körpers verteilt werden. Die Aufnahmen bilden in ihrer Gesamtheit zwar nur bis 360 Grad der Oberfläche ab. Allerdings werden die Aufnahmen mit der Kamera nicht während einer Umdrehung des Körpers, sondern während mehrerer Umdrehungen des Körpers aufgenommen. Werden beispielsweise 360 Aufnahmen benötigt, so wird beispielsweise jede Aufnahme nach einer Drehung von 361 Grad aufgenommen. Dadurch verteilen sich die Aufnahmen winkelversetzt auf die gesamte Umfangsoberfläche.

Grundsätzlich kann es sich hier um sogenannte 2-D-Aufnahmen handeln. Als 2-D-Aufnahmen werden im Rahmen dieser Erfindung Aufnahmen beschrieben, bei denen die Oberfläche senkrecht oder diffus beleuchtet wird. Die aufgenommenen Aufnahmen bzw. das zusammengesetzte Abbild aus allen Aufnahmen zeigt sodann die Oberfläche des Körpers, wobei die Informationen zur Oberflächenbeschaffenheit im Wesentlichen aus den Helligkeitswerten dieses Bilds zu entnehmen sind.

Des Weiteren ist es möglich, dass es sich um sogenannte 3-D-Aufnahmen handelt. Diese Aufnahmen werden insbesondere mittels Triangulation, insbesondere Lasertriangulation aufgenommen. Dabei wird die Oberfläche nicht senkrecht, sondern mit einem Triangulationswinkel beleuchtet. Die einzelne Aufnahme zeigt sodann eine zweidimensionale Kurve des jeweiligen Profilschnitts. Die Gesamtheit der Profilschnitte bildet die Oberfläche dreidimensional nach.

### Verteilen/Ziehen der Aufnahme(n) auf die Bildaufnahmefläche

Gemäß einer Variante der vorliegenden Erfindung müssen die Aufnahmen zur Darstellung der Umfangsoberfläche nicht zwingend auf mehrere Umdrehungen des Körpers verteilt werden. Im Rahmen der Erfindung wurde nämlich auch erkannt, dass es stattdessen oder zusätzlich möglich ist, mehrere der Aufnahmen während einer einzelnen Bildbeleuchtung der Kamera auf die Bildaufnahmefläche der Kamera zu verteilen (bei 3-D) oder eine Aufnahme über die Bildaufnahmefläche zu ziehen (bei 2-D). Die "Bildbeleuchtung" beschreibt den Zeitraum, dessen Maximum durch die Bildwechselfrequenz vorgegeben ist. Bei einer beispielhaften Bildwechselfrequenz von 1.000 pro Sekunde beträgt der maximale Zeitraum für die Bildbeleuchtung somit 1/1000 Sekunde. Die Bildaufnahmefläche der Kamera bestimmt sich insbesondere durch die Größe des Chips (auch: Bildsensor).

So umfasst die Erfindung eine Werkzeugmaschine, ausgebildet zur Durchführung eines Verfahrens zur Oberflächenaufnahme umfassend:
Rotieren des Körpers, insbesondere des Werkzeugs oder Werkstücks, um die Drehachse, und Aufnehmen einer Anzahl von a >=1 Aufnahme(n) während der Rotation des Körpers mit der Kamera.

Bei der beschriebenen 2-D Methode wird zumindest eine Aufnahme getätigt, die einen Drehwinkelbereich m von bis zu 360° der Oberfläche abbildet. Diese Aufnahme wird während einer einzelnen Bildbeleuchtung der Kamera über die Bildaufnahmefläche der Kamera gezogen, während der Körper rotiert. Dabei können auch mehrere Aufnahmen zu aufeinanderfolgenden Bildbeleuchtungen getätigt werden, wobei jede Aufnahme einen anderen Teilbereich einer Oberfläche des Körpers abbildet.

Bei der beschriebenen 3-D Methode werden mehrere Aufnahmen (hier: Profilschnitte) getätigt, die zusammen einen Drehwinkelbereich m von bis zu 360° der Oberfläche abbilden. Die mehreren Aufnahmen der Anzahl a werden während einer einzelnen Bildbeleuchtung der Kamera auf die Bildaufnahmefläche der Kamera verteilt, wobei jede Aufnahme einen anderen Teilbereich einer Oberfläche des Körpers abbildet. Insbesondere ist vorgesehen, dass zumindest 5 Aufnahmen, vorzugsweise zumindest 10 Aufnahmen, besonders vorzugsweise zumindest 50 Aufnahmen während einer Bildbeleuchtung auf die Bildaufnahmefläche verteilt werden.

Insbesondere beträgt die Anzahl der Aufnahmen a (die zusammen den Drehwinkelbereich m von bis zu 360° der Oberfläche abbilden) zumindest 10, vorzugsweise zumindest 50, weiter vorzugsweise zumindest 100, besonders vorzugsweise zumindest 500.

Vorzugsweise ist vorgesehen, dass das Verteilen der mehreren Aufnahmen bzw. das Ziehen der einen Aufnahme auf/über die Bildaufnahmefläche mittels einer beweglichen Spiegelanordnung erfolgt. Die Spiegelanordnung überträgt über zumindest einen Spiegel das Licht von der Oberfläche zur Kamera. Das Bewegen des Spiegels erfolgt insbesondere durch Hin- und Herschwenken oder vollumfängliches Drehen der Spiegelanordnung, insbesondere des zumindest einen Spiegels.

Besonders bevorzugt umfasst die Spiegelanordnung mehrere um eine Spiegeldrehachse verteilte einzelne Spiegel. Dadurch kann die Spiegelachse vollumfänglich drehen und ohne Totzeit die Aufnahmen auf die Bildaufnahmefläche verteilen. Dies ist insbesondere der Fall, wenn die einzelnen Spiegel der Spiegelanordnung unmittelbar aneinandergereiht sind.

Gemäß einer Ausführung ist bevorzugt vorgesehen, dass die Spiegel der Spiegelanordnung jeweils mit gleichem Spiegelwinkel zur normalen auf die Spiegeldrehachse angeordnet sind. Gemessen wird dabei stets am Schnittpunkt der normalen zur Mitte des einzelnen Spiegels. Insbesondere ist dabei vorgesehen, dass die Spiegelanordnung und der Körper mit unterschiedlichen Geschwindigkeiten gedreht werden, damit mit einem Spiegel mehrere Aufnahmen auf die Bildaufnahmefläche verteilt werden können bzw. damit mit einem Spiegel eine Aufnahme über die Bildaufnahmefläche gezogen werden kann.

In einer alternativen Ausgestaltung ist bevorzugt vorgesehen, dass die einzelnen Spiegel jeweils mit unterschiedlichem Spiegelwinkel zur Normalen auf die Spiegeldrehachse angeordnet sind. Dabei ist insbesondere vorgesehen, dass die Spiegelanordnung und der Körper mit der gleichen Geschwindigkeit gedreht werden. Besonders bevorzugt wird hierzu eine mechanische, drehmomentübertragende Verbindung zwischen der Spiegelanordnung und dem Körper eingesetzt, sodass eine automatische Synchronisierung der Drehgeschwindigkeit erfolgt.

Bei der oben beschriebenen 2-D-Aufnahme können die einzelnen Aufnahmen über die Bildaufnahmefläche der Kamera gezogen werden. Die einzelnen Aufnahmen liegen somit unmittelbar aneinander.

Bei der beschriebenen 3-D-Variante, insbesondere der Lasertriangulation, ist es von Vorteil, die einzelnen Aufnahmen auf der Bildaufnahmefläche voneinander zu beabstanden, sodass die einzelnen Kurven (Profilschnitte) eindeutig voneinander getrennt sind. Um diese Beabstandung der einzelnen Aufnahmen auf der Bildaufnahmefläche zu erreichen, ist bevorzugt vorgesehen, die Beleuchtung, insbesondere den Laser, zu triggern. Durch dieses Ein- und Ausschalten bzw. An- und Abblenden der Beleuchtung, wobei gleichzeitig die Spiegelanordnung weiterbewegt wird, erreicht man die Beabstandung der einzelnen Aufnahmen auf der Bildaufnahmefläche.

Vorzugsweise ist auch vorgesehen, anstatt oder zusätzlich zur Spiegelanordnung mit folgenden Möglichkeiten die mehreren Aufnahmen auf die Bildaufnahmefläche zu verteilen bzw. eine Aufnahme über die Bildaufnahmefläche zu ziehen:
So kann z.B. durch Bewegen der Kamera bzw. des Bildsensors oder durch Bewegen einer vorgesetzten Linse, insbesondere eines Objektivs, eine Verteilung bzw. ein Ziehen der Aufnahme(n) erfolgen.

Ferner können, wie bei einer Streak-Kamera, die Photonen über ein elektrisches Feld abgelenkt werden. Dies erfolgt insbesondere in einem Kristall mit einer angelegten Spannung (Bsp. Sägezahnspannung) zur Steuerung der Ablenkung. Auch so ist es möglich eine Verteilung bzw. ein Ziehen der Aufnahme(n) zu erreichen.

### Allgemein

Für beide hier beschriebene Varianten, also sowohl für die Verteilung der Aufnahmen auf mehrere Umdrehungen, als auch für die Variante mit der Verteilung/dem Ziehen der Aufnahmen auf /über die Bildaufnahmefläche gilt insbesondere Folgendes:
Bevorzugt ist vorgesehen, dass die Anzahl a an Aufnahmen in einem Abschnitt liegt oder in mehrere Abschnitte aufgeteilt ist.

Wenn hier ein Abschnitt verwendet wird, so beträgt dessen Abschnittswinkel q 360 Grad oder mehr. Beträgt der Abschnittswinkel q genau 360 Grad, wird pro Umdrehung des Körpers eine Aufnahme getätigt. Liegt der Abschnittswinkel q über 360 Grad, beispielsweise bei 2*360 Grad, so wird nicht bei jeder Umdrehung, sondern beispielsweise nur bei jeder zweiten Umdrehung, eine Aufnahme getätigt.

Werden andererseits die Aufnahmen auf mehrere Abschnitte aufgeteilt, so ist insbesondere vorgesehen, dass sich die einzelnen Abschnitte über einen jeweiligen Abschnittswinkel von q = m/k mit k = {2, 3, 4, ...} verteilen. m liegt vorzugsweise bei 360 Grad. Bei dieser Unterteilung werden dann beispielsweise bei k = 4, vier Aufnahmen pro Umdrehung des Körpers getätigt.

Unabhängig davon, ob ein Abschnitt (gegebenenfalls über 360 Grad) oder mehrere Abschnitte verwendet werden, wird pro Durchlauf eines Abschnitts genau eine Aufnahme getätigt.

Bei der 2-D Methode beträgt q maximal 360 Grad. Der einzelne Abschnitt (bei q=360 Grad) oder die mehreren Abschnitte (bei q<360 Grad) müssen nur einmal Durchlaufen werden. Pro Abschnitt wird eine Aufnahme getätigt, die während einer Bildbeleuchtung auf die Bildaufnahmefläche gezogen wird.

Bei der 3-D Methode wird jeder Abschnitt mehrmals Durchlaufen, bis alle Aufnahmen a getätigt sind. Pro Durchlaufen eines Abschnitts wird nur eine Aufnahme getätigt. Die Aufnahmen innerhalb des jeweiligen Abschnitts sind wiederum drehwinkelversetzt, sodass sich am Ende ein Gesamtbild der Oberfläche aus allen Aufnahmen ergibt.

Des Weiteren ist bevorzugt vorgesehen, dass eine Umdrehungsinformation des Körpers erfasst wird. Bei dieser Umdrehungsinformation handelt es sich insbesondere um eine Drehgeschwindigkeit oder eine Drehwinkelposition. Dabei ist vorzugsweise vorgesehen, dass die Kamera und/oder Beleuchtung, gegebenenfalls auch die verwendete Spiegelanordnung, basierend auf der Umdrehungsinformation angesteuert wird/werden. Insbesondere kann so der Drehwinkelversatz zwischen den einzelnen Aufnahmen und/oder die Verteilung/das Ziehen auf/über die Bildaufnahmefläche gesteuert werden.

Die Drehgeschwindigkeit des Körpers beträgt während der Aufnahmen vorzugsweise zumindest 10 U/s (Umdrehungen pro Sekunde), weiter vorzugsweise zumindest 50 U/s, besonders vorzugsweise zumindest 100 U/s.

Wenn der Körper als Werkzeug ausgebildet ist, handelt es sich bei dem Körper beispielsweise um eine Scheibe zum Reibquetschschweißen, um eine Schleifscheibe, um einen Fräser, um einen Bohrer oder ein sonstiges Werkzeug, das schnell rotiert. Wenn der Körper als Werkstück ausgebildet ist, kann sich der Körper beispielsweise in einer Drehmaschine befinden.

### Werkzeugmaschine

Die Werkzeugmaschine ist zur Durchführung des beschriebenen Verfahrens ausgebildet. Die Werkzeugmaschine umfasst einen Antrieb zum Rotieren des Körpers während die Aufnahmen getätigt werden. Der Körper ist dabei während seiner Nutzung als Werkzeug bzw. Werkstück mit demselben Antrieb rotierbar. Insbesondere umfasst die Werkzeugmaschine auch eine Kamera und die beschriebene Beleuchtung sowie ein Steuergerät zum Durchführen des Verfahrens.

Der Körper wird somit zur Durchführung des Verfahrens nicht in eine separate Vorrichtung eingespannt, sondern rotiert vor, während oder nach seiner Nutzung als Werkzeug bzw. Werkstück in der Werkzeugmaschine weiter.

Insbesondere ist auch ein Verfahren zum Betrieb der beschriebenen Werkzeugmaschinen vorgesehen. Wenn der Körper als Werkzeug ausgebildet ist, erfolgen vorzugsweise die Aufnahmen während mit diesem Werkzeug ein beliebiges Werkstück bearbeitet wird. Die Aufnahmen können somit gleichzeitig mit der Bearbeitung durchgeführt werden. Ist der Körper als Werkstück ausgebildet, erfolgen die Aufnahmen vorzugsweise gleichzeitig mit der Bearbeitung dieses Werkstücks durch ein beliebiges Werkzeug.

Weiter Einzelheiten, Vorteile und Merkmale der vorliegenden Erfindung ergeben sich aus nachfolgender Beschreibung von Ausführungsbeispielen anhand der Zeichnungen. Es zeigt:
- Fig. 1: eine schematische Ansicht des in der erfindungsgemäßen Werkzeugmaschine durchzuführenden Verfahrens,
- Fig. 2: eine schematische Ansicht zur Verteilung der Aufnahmen auf die Oberfläche eines Körpers gemäß dem in der erfindungsgemäßen Werkzeugmaschine durchzuführenden Verfahren,
- Fig. 3: eine schematische Ansicht zur Verteilung der Aufnahmen in einzelne Abschnitte auf der Oberfläche eines Körpers gemäß dem in der erfindungsgemäßen Werkzeugmaschine durchzuführenden Verfahren,
- Fig. 4: eine schematische Ansicht des in der erfindungsgemäßen Werkzeugmaschine durchzuführenden Verfahrens,
- Fig. 5: eine schematische Ansicht des in der erfindungsgemäßen Werkzeugmaschine durchzuführenden Verfahrens,
- Fig. 6: schematische Darstellungen von Aufnahmen nach dem in der erfindungsgemäßen Werkzeugmaschine durchzuführenden Verfahren,
- Fig. 7: eine schematische Ansicht des in der erfindungsgemäßen Werkzeugmaschine durchzuführenden Verfahrens,
- Fig. 8: eine schematische Ansicht des in der erfindungsgemäßen Werkzeugmaschine durchzuführenden Verfahrens,
- Fig. 9: eine schematische Ansicht des in der erfindungsgemäßen Werkzeugmaschine durchzuführenden Verfahrens,
- Fig. 10: eine schematische Darstellung zur Verteilung der Aufnahmen zu Fig. 9, und
- Fig. 11/12: Varianten zu Fig. 4.

Im Folgenden werden unterschiedliche Ausgestaltungen des in einer Werkzeugmaschine durchzuführenden Verfahrens bzw. der erfindungsgemäßen Werkzeugmaschine im Detail beschrieben.

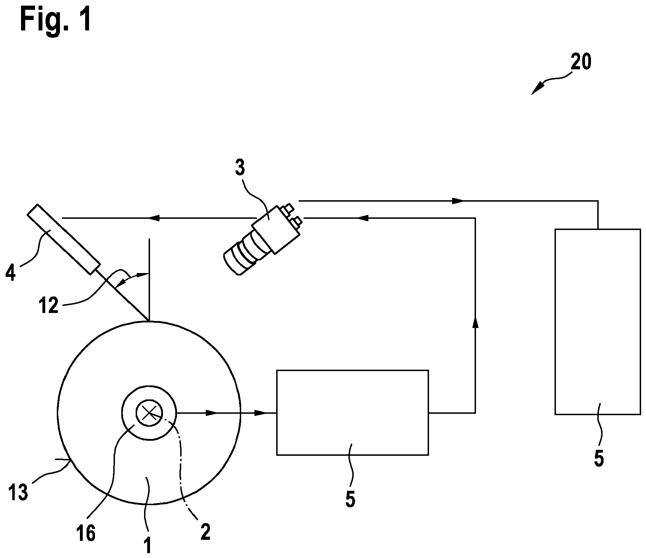

Fig. 1, 4, 5, 7, 8, 9 zeigen dabei jeweils rein schematisch die für das in der Werkzeugmaschine durchzuführende Verfahren wesentlichen Bestandteile, die insbesondere in eine Werkzeugmaschine 20 implementiert sind. Alternativ können die Komponenten in einer anderen Vorrichtung zur Anwendung kommen. Gleiche bzw. funktional gleiche Elemente sind stets mit denselben Bezugszeichen versehen.

Fig. 1 zeigt einen Köper 1, der um eine Drehachse 2 rotiert wird. Über eine Kamera 3 wird ein Teilbereich der Oberfläche 13 (hier: Umfangsoberfläche) des Körpers 1 aufgenommen. Eine Beleuchtung 4 ist hier als Laser ausgebildet. Die Beleuchtung 4 steht mit einem Triangulationswinkel 12 zur Senkrechten auf die Oberfläche 13, sodass hier die bereits beschriebene 3-D-Aufnahme erfolgt.

Mittels eines Steuergerätes 5 und eines Drehgebers 16 wird die Winkelposition und/oder Drehgeschwindigkeit des Körpers 1 erfasst. Basierend darauf kann die Beleuchtung 4 angesteuert werden, um so die Zeitpunkte für die Beleuchtung und somit für die gewünschten Aufnahmen zu erreichen.

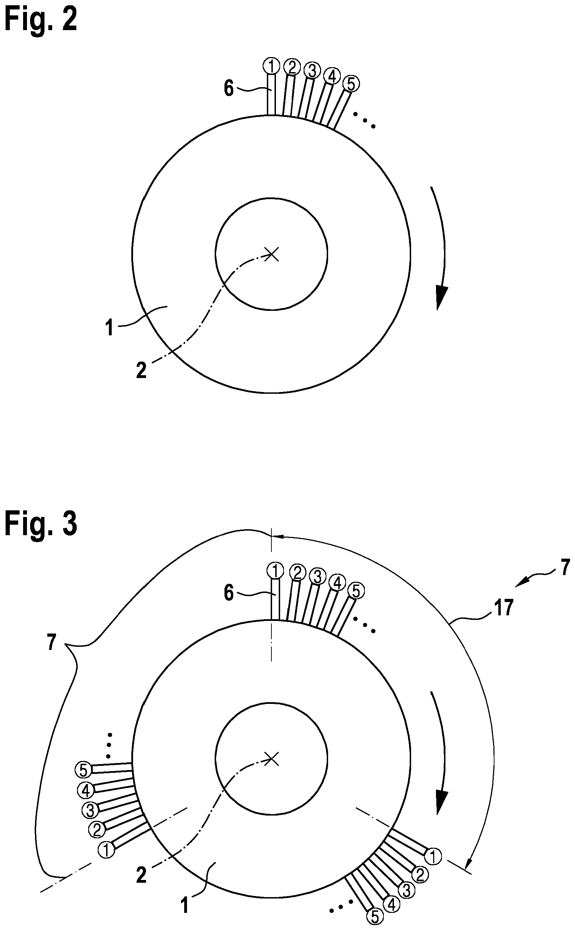

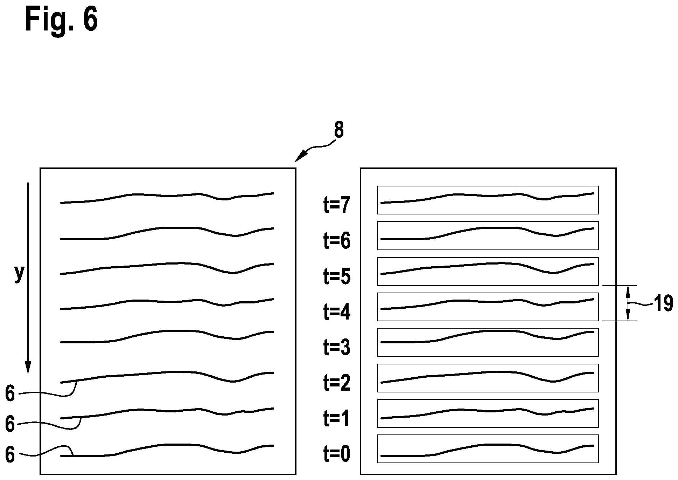

Fig. 2 zeigt rein schematisch die drehwinkelversetzte Verteilung von Aufnahmen 6 auf der Oberfläche 13 des Körpers 1. Bei dieser Ausgestaltung befinden sich sämtliche Aufnahmen 6 in einem Abschnitt von 360 Grad. Pro Umdrehung des Körpers 1 wird eine der dargestellten Aufnahmen mittels der Kamera 3 getätigt. Die einzelnen Aufnahmen 6 zeigen jeweils Profilschnitte, die noch anhand von Figur 6 erläutert werden.

Fig. 3 zeigt rein schematisch die Aufteilung der Aufnahmen 6 auf mehrere Abschnitte 7. Im gezeigten Beispiel werden die Aufnahmen 6 auf drei Abschnitte 7 verteilt. Pro Umdrehung des Körpers 1 wird in jedem Abschnitt 7 genau eine Aufnahme 6 getätigt. Die einzelnen Abschnitte 7 erstrecken sich hier jeweils über einen Abschnittswinkel 17 von 120 Grad.

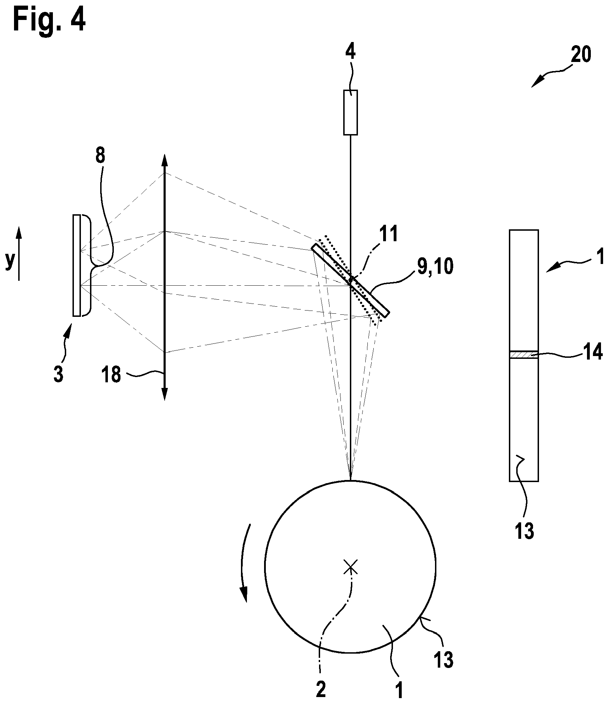

Die Figuren 4 bis 10 zeigen Varianten, bei denen die Aufnahmen auf eine Bildaufnahmefläche 8 der Kamera 3 verteilt bzw. gezogen werden.

In der schematischen Darstellung nach Figur 4 erfolgt die Beleuchtung der Oberfläche 13 senkrecht. Dementsprechend wird hier die bereits beschriebene 2-D-Aufnahme durchgeführt. Das Licht wird von der Oberfläche 13 über eine Spiegelanordnung 9, in dieser Ausführung mit einem einzelnen Spiegel 10, auf die Bildaufnahmefläche 8 der Kamera 3 geführt. In allen Ausführungsbeispielen kann insbesondere zumindest eine Linse 18, vorzugsweise ein Objektiv, vor der Kamera 3 verwendet werden.

Die Spiegelanordnung 9 ist hier halb durchlässig, sodass die außenliegende Beleuchtung 4 die Oberfläche 13 beleuchten kann.

Die Spiegelanordnung 9 ist um eine Spiegeldrehachse 11 drehbar oder hin und her schwenkbar. Dadurch können die einzelnen Aufnahmen 6 über die Bildaufnahmefläche 8 verteilt werden. Da es sich hier um die 2-D-Aufnahme handelt, werden die Aufnahmen 6 über die Bildaufnahmefläche 8 gezogen.

Auf der rechten Seite zeigt Figur 4 rein schematisch den Beleuchtungsstreifen auf der Oberfläche 13 für die Aufnahme 6.

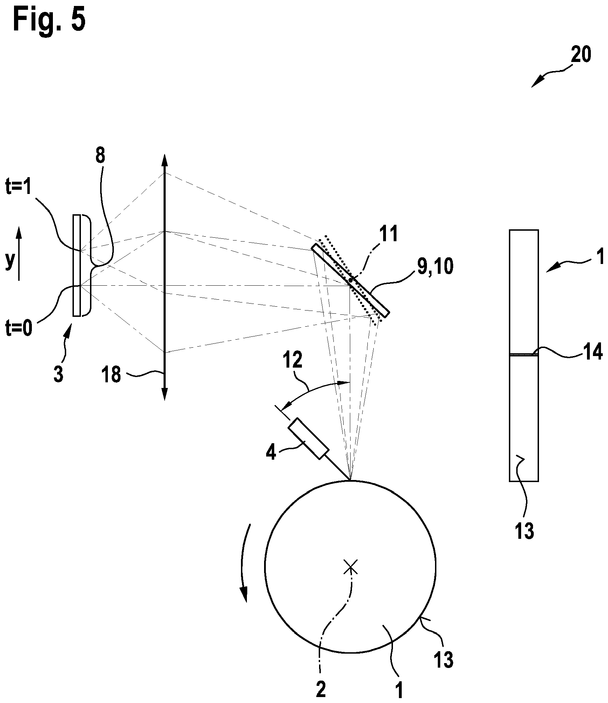

Figur 5 zeigt dieselbe Anordnung wie Figur 4, allerdings wird hier die Oberfläche 13 mit dem Triangulationswinkel 12 beleuchtet, der von der Senkrechten auf die Oberfläche 13 abweicht. Dabei ergibt sich eine Beleuchtungslinie 14, wie in der rechten Darstellung von Figur 5 gezeigt ist.

Über die drehbare Spiegelanordnung 9 werden die einzelnen Aufnahmen auf die Bildaufnahmefläche 8 verteilt. Hierbei handelt es sich um winkelversetzte Aufnahmen, die beispielsweise durch Triggern der Beleuchtung 4 voneinander beabstandet werden. Das dabei entstehende Bild zeigt Figur 6 mit hier bespielhaft sieben Aufnahmen 6, die über die Bildaufnahmefläche 8 verteilt sind. Die rechte Darstellung in Figur 6 zeigt rein schematisch die Beabstandung mit Abstand 19 der einzelnen Aufnahmen 6 auf der Bildaufnahmefläche 8.

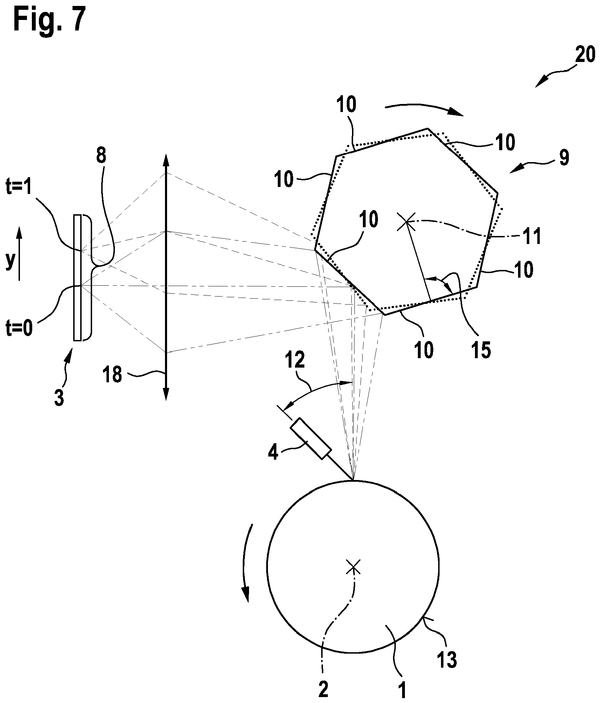

Figur 7 zeigt die gleiche Anordnung wie Figur 5, allerdings umfasst hier die Spiegelanordnung 9 mehrere Spiegel 10, im gezeigten Beispiel sechs Spiegel 10. Die Spiegelanordnung 9 rotiert um die Spiegeldrehachse 11.

In dieser Ausführung ist ein Spiegelwinkel 15 zu einer normalen auf die Spiegeldrehachse 11 bei allen Spiegeln 10 gleich ausgebildet. Der Drehwinkelversatz bzw. die Verteilung der einzelnen Aufnahmen 6 auf die Bildaufnahmefläche 8 wird durch die unterschiedlichen Positionen der Spiegelanordnung 9 ermöglicht.

In dem gezeigten Beispiel nach Figur 7 werden sechs Aufnahmen 6 bei einer Umdrehung der Spiegelanordnung 9 erfasst.

Hierbei ist insbesondere vorgesehen, dass sich die Drehzahl der Spiegelanordnung 9 leicht von der Drehzahl des Körpers 1 unterscheidet, wodurch sich der unterschiedliche Winkel der einzelnen Spiegel 10 gegenüber der Kamera 3 ergibt. Alternativ kann die Rotationsgeschwindigkeit so gewählt werden, dass mit jedem einzelnen Spiegel 10 mehrere Aufnahmen 6 während einer einzelnen Bildbeleuchtung auf die Bildaufnahmefläche 8 verteilt werden. Daraus resultiert eine deutliche Beschleunigung des Verfahrens.

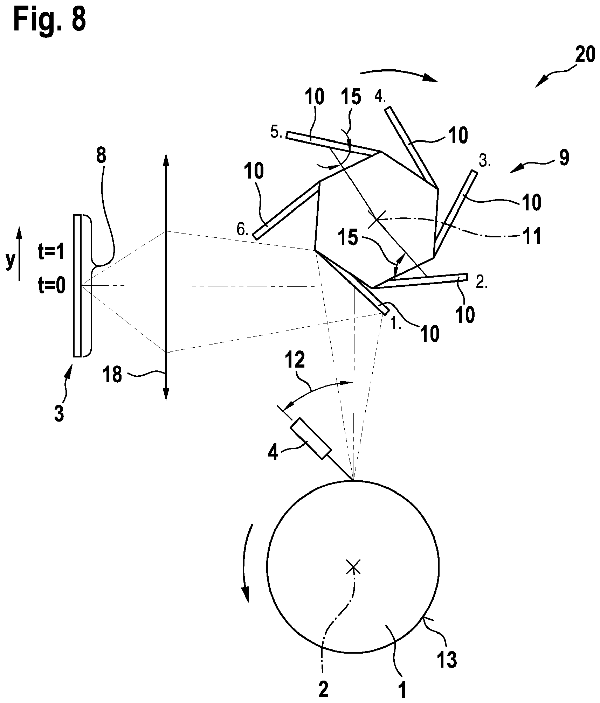

Figur 8 zeigt eine ähnliche Darstellung zu Figur 7. Hier weist jedoch jeder Spiegel 10 der Spiegelanordnung 9 einen anderen Spiegelwinkel 15 auf.

Ein Vorteil dieser Variante ist, dass die Spiegelanordnung 9 und der Körper 1 mit derselben Rotationsgeschwindigkeit laufen können. Dies wird insbesondere durch eine mechanische Synchronisation technisch einfach umgesetzt. Beispielweise durch ein Getriebe mit einer Übersetzung 1:1.

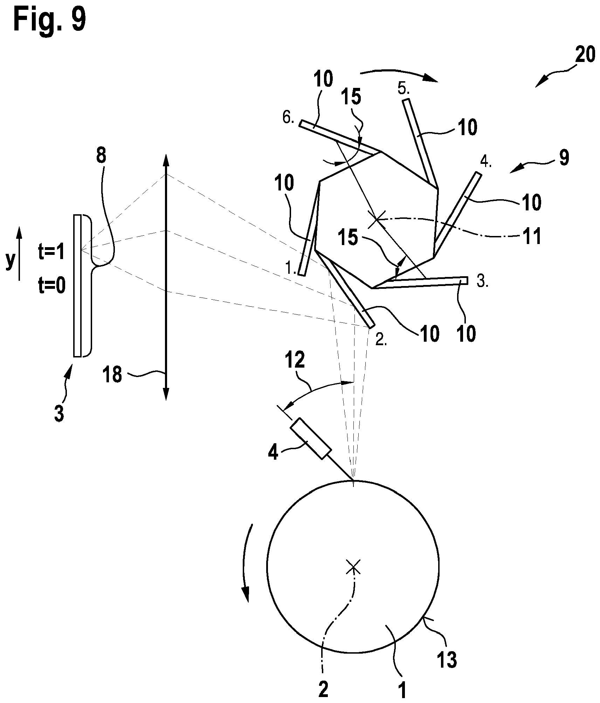

Die Zusammenschau der Figuren 8 und 9 zeigt, wie mit der Spiegelanordnung 9 mehrere Aufnahmen 6 auf die Bildaufnahmefläche 8 verteilt werden können.

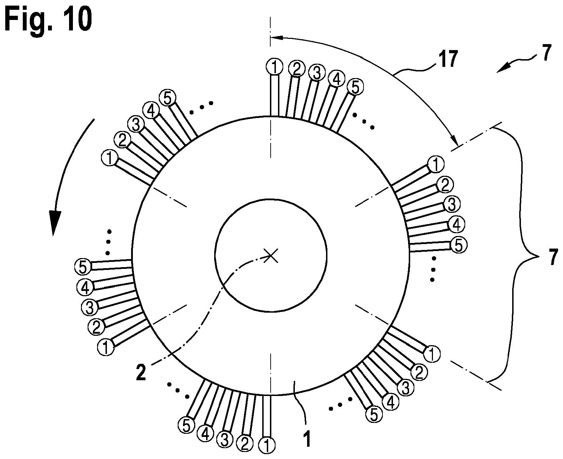

Figur 10 zeigt rein schematisch die Aufteilung der Aufnahmen 6 auf sechs einzelne Abschnitte 7 bei Verwendung der Spiegelanordnung 9 mit sechs einzelnen Spiegeln 10.

Insbesondere ist hierbei vorgesehen, dass stets mit demselben Spiegel die Aufnahmen 6 innerhalb eines Abschnitts 7 getätigt werden. So werden beispielsweise im ersten Abschnitt 7 sämtliche Aufnahmen 6 nur mit dem ersten Spiegel 10 getätigt.

Wie bereits beschrieben gilt insbesondere, dass pro Umdrehung des Körpers 1 in jedem Abschnitt 7 nur eine Aufnahme 6 getätigt wird.

Figur 4 zeigt eine Anordnung der Umlenkung (z.B. Spiegelanordnung 9) zwischen Beleuchtung 4 und Körper 1. Die Umlenkung (z.B. Spiegelanordnung 9) ist hier halbdurchlässig ausgeführt.

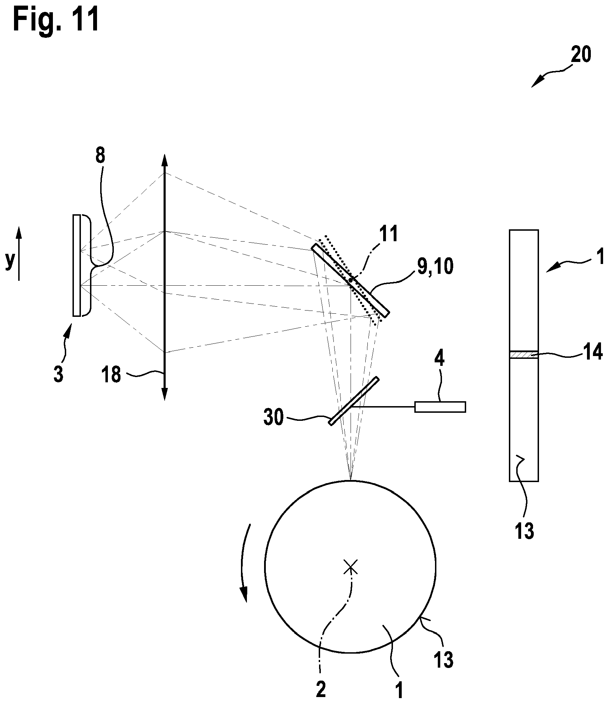

Alternativ kann gemäß Figur 11 auch ein halbdurchlässiger Spiegel 30 verwendet werden, der durch seine geneigte Anordnung das Licht der seitlichen Beleuchtung 4 senkrecht auf die Oberfläche 13 spiegelt. Der halbdurchlässiger Spiegel 30 ist insbesondere zwischen der Umlenkung (z.B. Spiegelanordnung 9) und dem Körper 1 angeordnet. Somit muss die Umlenkung nicht halbdurchlässig ausgeführt werden.

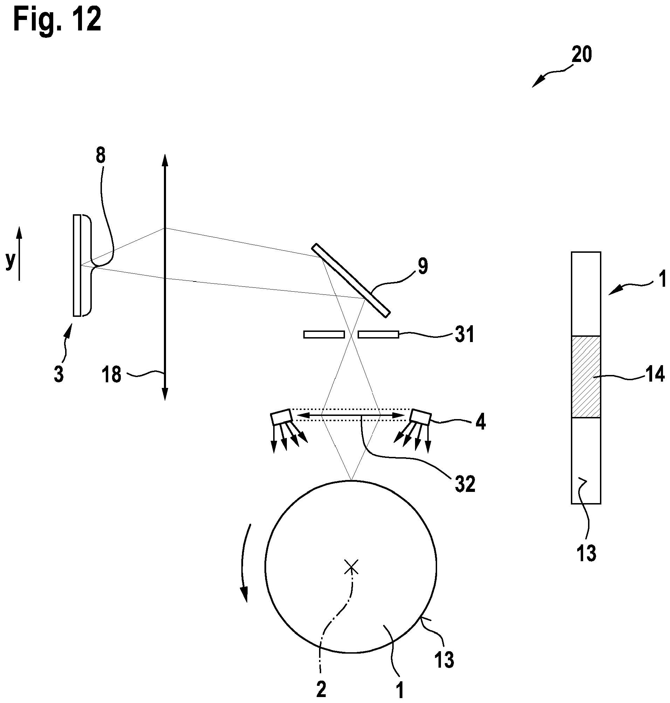

Ferner kann gemäß Figur 12 die Beleuchtung 4 zur diffusen Beleuchtung ausgebildet sein, z.B. mittels einer Ringbeleuchtung. Dabei ist insbesondere eine Schlitzblende 31 und/oder weitere Linse 32 vorgesehen. Die weitere Linse 32 ist insbesondere zwischen der Schlitzblende 31 und dem Körper 1 angeordnet.

Die unterschiedlichen Anordnungen der Beleuchtung 4 gemäß Figuren 4, 11, 12 können unabhängig von der Ausbildung der Umlenkung (z.B. als Spiegelanordnung 9) verwendet werden.

Neben der vorstehenden schriftlichen Beschreibung der Erfindung wird zu deren ergänzender Offenbarung hiermit explizit auf die zeichnerische Darstellung der Erfindung in allen Figuren Bezug genommen.

### Bezugszeichenliste

- 1: Körper (Werkzeug oder Werkstück)
- 2: Drehachse
- 3: Kamera
- 4: Beleuchtung (Laser)
- 5: Steuergerät
- 6: Aufnahmen
- 7: Abschnitte
- 8: Bildaufnahmefläche
- 9: Spiegelanordnung
- 10: Spiegel
- 11: Spiegeldrehachse
- 12: Triangulationswinkel
- 13: Oberfläche
- 14: Beleuchtungsstreifen/-linie
- 15: Spiegelwinkel
- 16: Drehgeber
- 17: Abschnittswinkel
- 18: Linse, inbs. Objektiv
- 19: Abstand
- 20: Werkzeugmaschine
- 30: halbdurchlässiger Spiegel
- 31: Schlitzblende
- 32: weitere Linse

## Patentansprüche

1. Werkzeugmaschine (20) ausgebildet zur Durchführung eines Verfahrens zur Oberflächenaufnahme umfassend:
Rotieren eines Körpers (1), insbesondere eines Werkzeugs oder Werkstücks, um eine Drehachse (2), und
Aufnehmen einer Anzahl von a >1 drehwinkelversetzter Aufnahmen (6) während der Rotation des Körpers (1) mit einer Kamera (3),
• wobei jede Aufnahme (6) einen anderen Teilbereich einer Oberfläche (13), insbesondere Umfangsoberfläche, des Körpers (1) abbildet,
• wobei die a Aufnahmen (6) einen Drehwinkelbereich m von bis zu 360° der Oberfläche (13) abbilden
• und wobei die a Aufnahmen (6) auf mehrere Umdrehungen des Körpers (1) verteilt werden
wobei die Werkzeugmaschine (20) einen Antrieb zum Rotieren des Körpers (1) während der Aufnahmen (6) umfasst, wobei der Körper (1) während seiner Nutzung als Werkzeug bzw. Werkstück mit demselben Antrieb rotierbar ist.

2. Werkzeugmaschine (20) ausgebildet zur Durchführung eines Verfahrens zur Oberflächenaufnahme umfassend:
Rotieren eines Körpers (1), insbesondere eines Werkzeugs oder Werkstücks, um eine Drehachse (2), und
Aufnehmen einer Anzahl von a >=1 Aufnahme(n) (6) während der Rotation des Körpers (1) mit einer Kamera (3),
• wobei die a Aufnahme(n) (6) einen Drehwinkelbereich m von bis zu 360° der Oberfläche (13) abbilden
• und wobei mehrere der Aufnahmen (6) während einer einzelnen Bildbeleuchtung der Kamera (3) auf die Bildaufnahmefläche (8) der Kamera (3) verteilt werden oder wobei eine Aufnahme (6) während einer einzelnen Bildbeleuchtung der Kamera (3) über die Bildaufnahmefläche (8) der Kamera (3) gezogen wird,
wobei die Werkzeugmaschine (20) einen Antrieb zum Rotieren des Körpers (1) während der Aufnahmen (6) umfasst, wobei der Körper (1) während seiner Nutzung als Werkzeug bzw. Werkstück mit demselben Antrieb rotierbar ist.

3. Werkzeugmaschine nach Anspruch 2, wobei die Aufnahme(n) (6) durch Bewegen, insbesondere schwenken oder vollumfänglich drehen, einer Spiegelanordnung (9) oder durch Bewegen der Kamera (3) auf die Bildaufnahmefläche (8) verteilt/gezogen werden.

4. Werkzeugmaschine nach Anspruch 3, wobei die Spiegelanordnung (9) mehrere um eine Spiegeldrehachse (11) verteilte Spiegel (10) umfasst.

5. Werkzeugmaschine nach Anspruch 4, wobei die Spiegel (10) mit gleichem Spiegelwinkel (15) zur Normalen auf die Spiegeldrehachse (11) angeordnet sind, wobei vorzugsweise die Spiegelanordnung (9) und der Körper (1) mit unterschiedlichen Geschwindigkeiten gedreht werden.

6. Werkzeugmaschine nach Anspruch 4, wobei die Spiegel (10) mit unterschiedlichen Spiegelwinkeln (15) zur Normalen auf die Spiegeldrehachse (11) angeordnet sind, wobei vorzugsweise die Spiegelanordnung (9) und der Körper (1) mit gleicher Geschwindigkeiten gedreht werden, insbesondere synchronisiert über eine mechanische, drehmomentübertragende Verbindung.

7. Werkzeugmaschine nach einem der Ansprüche 2 bis 6, wobei über eine getriggerte Beleuchtung (4) die einzelnen Aufnahmen (6) auf der Bildaufnahmefläche (8) voneinander beabstandet werden.

8. Werkzeugmaschine nach einem der vorhergehenden Ansprüche,
• wobei die a Aufnahme(n) (6) in einem Abschnitt liegt/liegen oder in mehrere Abschnitte (7) aufgeteilt ist und
• wobei pro Durchlauf eines Abschnitts (7) genau eine Aufnahme (6) gemacht wird.

9. Werkzeugmaschine nach Anspruch 8, wobei sich der Abschnitt über einen Abschnittswinkel q>=360° bezüglich der Drehachse (2) erstreckt, oder wobei sich die mehreren Abschnitte (7) jeweils über einen Abschnittswinkel (17) q=m/k mit k={2, 3, 4, ...} bezüglich der Drehachse (2) erstrecken, vorzugsweise mit m=360°.

10. Werkzeugmaschine nach einem der vorhergehenden Ansprüche, wobei eine Umdrehungsinformation, insbesondere Drehgeschwindigkeit und/oder Drehwinkelposition, des Körpers (1) erfasst wird und die Spiegelanordnung (9) und/oder die Kamera (3) und/oder die Beleuchtung (4) basierend auf der Umdrehungsinformation angesteuert wird/werden.

11. Werkzeugmaschine nach einem der vorhergehenden Ansprüche, wobei der Körper (1) mit einem Triangulationswinkel (12) beleuchtet wird, vorzugsweise mittels Laser, und die einzelnen Aufnahmen (6) jeweils Profilschnitte der Umfangsoberfläche (13) darstellen.

12. Verfahren zum Betrieb einer Werkzeugmaschine (20) nach einem der vorhergehenden Ansprüche, wobei die Aufnahmen (6) am Körper (1), nämlich dem Werkzeug, während der Bearbeitung eines beliebigen Werkstücks mit dem Körper (1) durchgeführt werden, oder wobei die Aufnahmen (6) am Körper (1), nämlich dem Werkstück, während der Bearbeitung des Körpers (1) mit einem beliebigen Werkzeug durchgeführt werden.

## Claims

1. A machine tool (20) configured to perform a method of surface recording comprising:
rotating a body (1), in particular a tool or workpiece, around a rotation axis (2), and
accommodating a number of a >1 rotational angle offset recordings (6) during the rotation of the body (1) with a camera (3),
- wherein each recording (6) images a different portion of a surface (13), in particular a circumferential surface, of the body (1),
- wherein the a recording (6) images a rotation angle range m of up to 360° of the surface (13),
- and wherein the a recording (6) is distributed on multiple revolutions of the body (1),
wherein the machine tool (20) comprises a drive to rotate the body (1) during the recordings (6), wherein the body (1) is rotatable with the same drive during its use as tool or workpiece.

2. The machine tool (20) configured to perform a method of surface recording comprising:
rotating a body (1), in particular a tool or workpiece, around a rotation axis (2), and
accommodating a number of a >=1 recording(s) (6) during the rotation of the body (1) with a camera (3),
- wherein the a recording(s) (6) image a rotation angle range m of up to 360° of the surface (13),
- and wherein multiple of the recordings (6) are distributed on the image recording area (8) of the camera (3) during a single image illumination of the camera (3) or wherein a recording (6) is taken via the image recording area (8) of the camera (3) during a single image illumination of the camera (3),
wherein the machine tool (20) comprises a drive to rotate the body (1) during the recordings (6), wherein the body (1) is rotatable with the same drive during its use as a tool or workpiece.

3. The machine tool according to claim 2, wherein the recording(s) (6) are distributed/taken on the image recording area (8) by moving, in particular pivoting or fully rotating, a mirror arrangement (9) or by moving the camera (3).

4. The machine tool according to claim 3, wherein the mirror arrangement (9) comprises multiple mirrors (10) distributed around a mirror rotation axis (11).

5. The machine tool according to claim 4, wherein the mirrors (10) are arranged with the same mirror angle (15) to the normal to the mirror rotation axis (11), wherein preferably the mirror arrangement (9) and the body (1) are rotated at different speeds.

6. The machine tool according to claim 4, wherein the mirrors (10) are arranged at different mirror angles (15) to the normal to the mirror rotation axis (11), wherein preferably the mirror arrangement (9) and the body (1) are rotated at the same speeds, in particular synchronized via a mechanical, torque-transmitting connection.

7. The machine tool according to any one of claims 2 to 6, wherein the individual recordings (6) on the image recording area (8) are spaced apart via a triggered illumination (4).

8. The machine tool according to any of the preceding claims,
- wherein the recording(s) (6) is/are located in one section or is divided into multiple sections (7), and
- wherein exactly one recording (6) is made per pass of a section (7).

9. The machine tool according to claim 8, wherein the section extends via a section angle q>=360° with respect to the rotation axis (2), or wherein the multiple sections (7) extend respectively via a section angle (17) q=m/k with k={2, 3, 4, ...} with respect to the rotation axis (2), preferably with m=360°.

10. The machine tool according to any of the preceding claims, wherein a revolution information, in particular rotation speed and/or rotation angle position, of the body (1) is detected and the mirror arrangement (9) and/or the camera (3) and/or the illumination (4) is/are controlled based on the revolution information.

11. The machine tool according to one of the preceding claims, wherein the body (1) is illuminated with a triangulation angle (12), preferably via laser, and the individual recordings (6) respectively represent profile sections of the circumferential surface (13).

12. A method of operating a machine tool (20) according to any of the preceding claims, wherein the recordings (6) are performed at the body (1), namely the tool, during the machining of any workpiece with the body (1), or wherein the recordings (6) are performed at the body (1), namely the workpiece, during the machining of the body (1) with any tool.

## Revendications

1. Machine-outil (20) réalisée pour la réalisation d'un procédé de prise de vue de surface comprenant :
la rotation d'un corps (1), en particulier d'un outil ou d'une pièce à usiner, autour d'un axe de rotation (2), et
la prise d'un nombre de a > 1 prises de vue (6) décalées en angle de rotation pendant la rotation du corps (1) avec une caméra (3),
- dans laquelle chaque prise de vue (6) représente une autre zone partielle d'une surface (13), en particulier une surface périphérique, du corps (1),
- dans laquelle les a prises de vue (6) représentent une plage d'angle de rotation m allant jusqu'à 360° de la surface (13)
- et dans laquelle les a prises de vue sont réparties sur plusieurs rotations du corps (1)
dans laquelle la machine-outil (20) comprend un entraînement pour la rotation du corps (1) pendant les prises de vue (6), dans laquelle le corps (1) peut être tourné pendant son utilisation en tant qu'outil ou pièce à usiner avec le même entraînement.

2. Machine-outil (20) réalisée pour la réalisation d'un procédé de prise de vue de surface comprenant :
la rotation d'un corps (1), en particulier d'un outil ou d'une pièce à usiner, autour d'un axe de rotation (2), et
la prise d'un nombre de a >= 1 prises de vue (6) pendant la rotation du corps (1) avec une caméra (3),
- dans laquelle les a prises de vue (6) représentent une plage d'angle de rotation m allant jusqu'à 360° de la surface (13)
- et dans laquelle plusieurs des prises de vue (6) sont réparties pendant un éclairage d'image individuel de la caméra (3) sur la surface de prise de vue d'image (8) de la caméra (3) ou dans laquelle une prise de vue (6) est tirée pendant un éclairage d'image individuel de la caméra (3) sur la surface de prise de vue d'image (8) de la caméra (3),
dans laquelle la machine-outil (20) comprend un entraînement pour la rotation du corps (1) pendant les prises de vue (6), dans laquelle le corps (1) peut être tourné pendant son utilisation en tant qu'outil ou pièce à usiner avec le même entraînement.

3. Machine-outil selon la revendication 2, dans laquelle la/les prise(s) de vue (6) sont réparties/tirées par déplacement, en particulier pivotement ou rotation sur toute la périphérie, d'un ensemble de miroirs (9) ou par déplacement de la caméra (3) sur la surface de prise de vue d'image (8).

4. Machine-outil selon la revendication 3, dans laquelle l'ensemble de miroirs (9) comprend plusieurs miroirs (10) répartis autour d'un axe de rotation de miroir (11).

5. Machine-outil selon la revendication 4, dans laquelle les miroirs (10) sont agencés avec un angle de miroir identique (15) par rapport à la normale sur l'axe de rotation de miroir (11), dans laquelle l'ensemble de miroirs (9) et le corps (1) sont de préférence tournés à différentes vitesses.

6. Machine-outil selon la revendication 4, dans laquelle les miroirs (10) sont agencés avec différents angles de miroir (15) par rapport à la normale sur l'axe de rotation de miroir (11), dans laquelle l'ensemble de miroirs (9) et le corps (1) sont de préférence tournés à différentes vitesses, en particulier synchronisés par le biais d'une liaison mécanique de transmission de couple.

7. Machine-outil selon l'une quelconque des revendications 2 à 6, dans laquelle les prises de vue (6) individuelles sont espacées les unes des autres sur la surface de prise de vue d'image (8) par le biais d'un éclairage (4) déclenché.

8. Machine-outil selon l'une quelconque des revendications précédentes,
- dans laquelle la/les a prise(s) de vue (6) est/sont dans une section ou est/sont répartie(s) en plusieurs sections (7) et
- dans laquelle précisément une prise de vue (6) est réalisée par passage d'une section (7).

9. Machine-outil selon la revendication 8, dans laquelle la section s'étend sur un angle de section q >= 360° par rapport à l'axe de rotation (2), ou dans laquelle les plusieurs sections (7) s'étendent respectivement sur un angle de section (17) q = m/k avec k = {2, 3, 4, ...} par rapport à l'axe de rotation (2), de préférence avec m = 360°.

10. Machine-outil selon l'une quelconque des revendications précédentes, dans laquelle une information de rotation, en particulier une vitesse de rotation et/ou une position d'angle de rotation, du corps (1) est détectée et l'ensemble de miroirs (9) et/ou la caméra (3) et/ou l'éclairage (4) est/sont commandés sur la base de l'information de rotation.

11. Machine-outil selon l'une quelconque des revendications précédentes, dans laquelle le corps (1) est éclairé avec un angle de triangulation (12), de préférence au moyen du laser, et les prises de vue individuelles (6) représentent respectivement des sections de profil de la surface périphérique (13).

12. Procédé de fonctionnement d'une machine-outil (20) selon l'une quelconque des revendications précédentes, dans laquelle les prises de vue (6) sont réalisées au niveau du corps (1), à savoir de l'outil, pendant l'usinage d'une pièce à usiner quelconque avec le corps (1), ou dans lequel les prises de vue (6) sont réalisées au niveau du corps (1), à savoir de la pièce à usiner, pendant l'usinage du corps (1) avec un outil quelconque.
